# EUROPÄISCHE PATENTSCHRIFT

(11) **EP 2 543 230 B1**
(45) Veröffentlichungstag und Bekanntmachung des Hinweises auf die Patenterteilung: **14.06.2017**
(21) Anmeldenummer: 11703878.6
(22) Anmeldetag: 15.02.2011
(51) Int. Cl.: H05B 3/84

(54) **Scheibe mit einem elektrischen Anschlusselement**
Pane with electric connection element
Disque doté d'un élément de raccordement électrique

(30) Priorität: 02.03.2010 EP 10155181
(43) Veröffentlichungstag der Anmeldung: 09.01.2013
(73) Patentinhaber: Saint-Gobain Glass France, 92400 Courbevoie (FR)
(72) Erfinder: ZIEGLER, Stefan, 45549 Sprockhövel (DE); RATEICZAK, Mitja, 52146 Würselen (DE); REUL, Bernhard, 52134 Herzogenrath (DE); SCHLARB, Andreas, 52134 Herzogenrath (DE)
(74) Vertreter: Lendvai, Tomas
(86) Internationale Anmeldenummer: PCT/EP2011/052196
(87) Internationale Veröffentlichungsnummer: WO 2011/107342

(56) Entgegenhaltungen:
- EP-A1- 0 488 878
- EP-A1- 1 488 972
- WO-A1-98/47200
- US-A- 2 709 211
- US-A1- 2007 224 842
- US-B1- 6 406 337

## Beschreibung

Die Erfindung betrifft eine Scheibe mit einem elektrischen Anschlusselement und ein wirtschaftliches und umweltfreundliches Verfahren zu deren Herstellung.

Die Erfindung betrifft weiter eine Scheibe mit einem elektrischen Anschlusselement für Fahrzeuge mit elektrisch leitfähigen Strukturen wie beispielsweise Heizleiter oder Antennenleiter. Die elektrisch leitfähigen Strukturen sind üblicherweise über angelötete elektrische Anschlusselemente mit der Bordelektrik verbunden. Aufgrund unterschiedlicher thermischer Ausdehnungskoeffizienten der verwendeten Materialien treten mechanische Spannungen bei der Herstellung und im Betrieb auf welche die Scheiben belasten und den Bruch der Scheibe hervorrufen können.

Bleihaltige Lote weisen eine hohe Duktilität auf, die auftretende mechanische Spannungen zwischen elektrischem Anschlusselement und der Scheibe durch plastische Deformierung kompensieren können. Allerdings müssen aufgrund der Altauto-Richtlinie 2000/53/EG innerhalb der EG bleihaltige Lote durch bleifreie Lote ersetzt werden. Die Richtlinie wird zusammenfassend mit dem Kürzel ELV (End of life vehicles) bezeichnet. Das Ziel ist dabei, im Zuge der massiven Ausweitung von Wegwerfelektronik äußerst problematische Bestandteile aus den Produkten zu verbannen. Die betroffen Substanzen sind Blei, Quecksilber, Cadmium und Chrom. Das betrifft unter anderem die Durchsetzung von bleifreien Lötmitteln in elektrischen Anwendungen auf Glas und die Einführung entsprechender Ersatzprodukte hierzu.

EP 1 942 703 A2 offenbart ein elektrisches Anschlusselement an Scheiben von Fahrzeugen, wobei die Differenz der thermischen Ausdehnungskoeffizienten von Scheibe und elektrischem Anschlusselement < 5 x 10⁻⁶/°C beträgt. Um eine ausreichende mechanische Stabilität und Prozessierbarkeit zu ermöglichen wird vorgeschlagen einen Lotmassenüberschuss zu verwenden. Der Überschuss an Lotmasse tritt aus dem Zwischenraum zwischen dem Anschlusselement und elektrisch leitfähiger Struktur heraus. Der Überschuss an Lotmasse verursacht hohe mechanische Spannungen in der Glasscheibe. Diese mechanischen Spannungen führen schließlich zum Bruch der Scheibe.

US 2007/0224842 A1 offenbart ein weiteres elektrisches Anschlusselement an Scheiben von Fahrzeugen, wobei die Differenz der thermischen Ausdehnungskoeffizienten von Scheibe und elektrischem Anschlusselement < 5 x 10⁻⁶/°C beträgt. Das Anschlusselement enthält bevorzugt Titan, kann aber auch eine Eisen-Nickel-Legierung enthalten.

Auch US 2,709,211 offenbart eine Fahrzeugscheibe mit einem Anschlusselement, wobei Anschlusselement und Scheibe ein ähnliches thermisches Ausdehnungsverhalten zeigen sollen. Das Anschlusselement kann dazu bevorzugt aus einer Legierung mit 52% Eisen und 48% Nickel gefertigt sein.

WO 98/47200 offenbart eine Fahrzeugscheibe mit leitfähiger Struktur und einem daran angelöteten Anschlusselement und lehrt, dass ein übermäßiger Austritt der Lotmasse aus dem Zwischenraum zwischen Anschlusselement und leitfähiger Struktur für die Stabilität der Lötverbindung nachteilig ist. Auch die EP 0 488 878 A1 stellt einen übermäßigen Lotmassenaustritt zwischen Anschlusselement und Scheibe als unerwünscht dar.

Die Aufgabe der vorliegenden Erfindung ist es, eine Scheibe mit einem elektrischen Anschlusselement und ein wirtschaftliches und umweltfreundliches Verfahren zu deren Herstellung bereitzustellen, wobei kritische mechanische Spannungen in der Scheibe vermieden werden.

Die Aufgabe der vorliegenden Erfindung wird durch eine Scheibe mit einem Anschlusselement gelöst, das die folgende Merkmale umfasst:
- ein Substrat aus Glas mit einem ersten thermischen Ausdehnungskoeffizienten,
- eine elektrisch leitfähige Struktur mit einer Schichtdicke von 5 µm bis 40 µm, bevorzugt 5 µm bis 20 µm, auf einem Bereich des Substrats,
- ein Anschlusselement mit einem zweiten thermischen Ausdehnungskoeffizienten, wobei die Differenz zwischen dem ersten und dem zweiten Ausdehnungskoeffizienten < 5 x 10⁻⁶/°C ist und
- eine Schicht einer Lotmasse, die das Anschlusselement mit Teilbereichen der elektrisch leitfähigen Struktur elektrisch verbindet.

Auf der Scheibe ist eine elektrisch leitfähige Struktur aufgebracht. Ein elektrisches Anschlusselement ist mit einer Lotmasse auf Teilbereichen mit der elektrisch leitfähigen Struktur elektrisch verbunden.

Die maximale Austrittsbreite ist definiert als der Abstand zwischen den Außenkanten des Anschlusselementes und der Stelle des Lotmasseübertritts, an dem die Lotmasse eine Schichtdicke von 50 µm unterschreitet. Die maximale Austrittsbreite wird nach dem Lötvorgang an der erstarrten Lotmasse gemessen.

Eine gewünschte maximale Austrittsbreite wird durch eine geeignete Wahl von Lotmassenvolumen und lotrechtem Abstand zwischen Anschlusselement und elektrisch leitfähiger Struktur erreicht, was durch einfache Versuche ermittelt werden kann. Der lotrechte Abstand zwischen Anschlusselement und elektrisch leitfähiger Struktur kann durch ein entsprechendes Prozesswerkzeug, beispielsweise ein Werkzeug mit einem integrierten Abstandshalter, vorgegeben werden.

Die maximale Austrittsbreite ist erfindungsgemäß negativ, also in den von elektrischem Anschlusselement und elektrisch leitfähiger Struktur gebildeten Zwischenraum zurückgezogen in einem konkaven Meniskus. Ein konkaver Meniskus entsteht beispielsweise durch Erhöhen des lotrechten Abstands zwischen Abstandshalter und leitfähiger Struktur beim Lötvorgang, während das Lot noch flüssig ist.

Der Vorteil liegt in der Reduzierung der mechanischen Spannungen in der Scheibe, insbesondere im kritischen Bereich der bei einem großen Lotmasseübertritts vorliegt.

Der erste thermische Ausdehnungskoeffizient ist bevorzugt von 8 x 10⁻⁶/°C bis 9 x 10⁻⁶/°C. Das Substrat ist bevorzugt Glas, das bevorzugt einen thermischen Ausdehnungskoeffizienten von 8,3 x 10⁻⁶/°C bis 9 x 10⁻⁶/°C in einem Temperaturbereich von 0 °C bis 300 °C aufweist.

Der zweite thermische Ausdehnungskoeffizient ist bevorzugt von 8 x 10⁻⁶/°C bis 9 x 10⁻⁶/°C, besonders bevorzugt von 8,3 x 10⁻⁶/°C bis 9 x 10⁻⁶/°C in einem Temperaturbereich von 0 °C bis 300 °C.

Die erfindungsgemäße elektrisch leitfähige Struktur weist bevorzugt eine Schichtdicke von 8 µm bis 15 µm, besonders bevorzugt von 10 µm bis 12 µm auf. Die erfindungsgemäße elektrisch leitfähige Struktur enthält bevorzugt Silber, besonders bevorzugt Silberpartikel und Glasfritten.

Die erfindungsgemäße Schichtdicke des Lots ist < 3.0 x 10⁻⁴ m. Die erfindungsgemäße Lotmasse enthält bevorzugt Zinn und Wismut, Indium, Zink, Kupfer, Silber oder Zusammensetzungen davon. Der Anteil an Zinn in der erfindungsgemäßen Lotzusammensetzung beträgt von 3 Gew.-% bis 99,5 Gew.-%, bevorzugt von 10 Gew.-% bis 95,5 Gew.-%, besonders bevorzugt von 15 Gew.-% bis 60 Gew.-%. Der Anteil an Wismut, Indium, Zink, Kupfer, Silber oder Zusammensetzungen davon beträgt in der erfindungsgemäßen Lotzusammensetzung von 0,5 Gew.-% bis 97 Gew.-%, bevorzugt 10 Gew.-% bis 67 Gew.-%, wobei der Anteil an Wismut, Indium, Zink, Kupfer oder Silber 0 Gew.-% betragen kann. Die erfindungsgemäße Lotzusammensetzung kann Nickel, Germanium, Aluminium oder Phosphor mit einem Anteil von 0 Gew.-% bis 5 Gew.-% enthalten. Die erfindungsgemäße Lotzusammensetzung enthält ganz besonders bevorzugt Bi40Sn57Ag3, Sn40Bi57Ag3, Bi59Sn40Ag1, Bi57Sn42Ag1, In97Ag3, Sn95,5Ag3,8Cu0,7, Bi67In33, Bi33In50Sn17, Sn77,2In20Ag2,8, Sn95Ag4Cu1, SN99Cu1, Sn96,5Ag3,5 oder Gemische davon.

Das erfindungsgemäße Anschlusselement enthält zumindest 50 Gew.-% bis 60 Gew.-% Eisen, 25 Gew.-% bis 35 Gew.-% Nickel, 15 Gew.-% bis 20 Gew.-% Kobalt, 0 Gew.-% bis 0,5 Gew.-% Silizium, 0 Gew.-% bis 0,1 Gew.-% Kohlenstoff oder 0 Gew.-% bis 0,5 Gew.-% Mangan.

Das erfindungsgemäße Anschlusselement ist besonders bevorzugt mit Nickel, Zinn, Kupfer und / oder Silber beschichtet. Das erfindungsgemäße Anschlusselement ist ganz besonders bevorzugt mit 0,1 µm bis 0,3 µm Nickel und / oder 3 µm bis 10 µm Silber beschichtet. Das Anschlusselement kann vernickelt, verzinnt, verkupfert und / oder versilbert werden. Ni und Ag verbessern die Stromtragfähigkeit und Korrosionsstabilität des Anschlusselements und die Benetzung mit der Lotmasse.

Das erfindungsgemäße Anschlusselement enthält bevorzugt Kovar (FeCoNi) mit einer maximalen Differenz von Kovar von 5 x 10⁻⁶/°C zum Ausdehnungskoeffizienten der Scheibe.

Kovar ist eine Eisen-Nickel-Kobalt Legierung, die Wärmeausdehnungskoeffizienten von üblicherweise etwa 5 x 10⁻⁶/°C aufweist, der damit geringer als der Koeffizient typischer Metalle ist. Die Zusammensetzung enthält beispielsweise 54 Gew.-% Eisen, 29 Gew.-% Nickel und 17 Gew.-% Kobalt. Im Bereich der Mikroelektronik und Mikrosystemtechnik wird deshalb Kovar als Gehäusewerkstoff oder als Submount eingesetzt. Submounts liegen nach dem Sandwichprinzip zwischen dem eigentlichen Trägermaterial und dem Material mit meistens deutlich größerem Ausdehnungskoeffizienten. Kovar dient somit als ausgleichendes Element, welches die durch die unterschiedlichen Wärmeausdehnungskoeffizienten der anderen Materialien verursachten thermomechanischen Spannungen aufnimmt und verringert. In gleicher Weise dient Kovar für Metall-Glas-Durchführungen von elektronischen Bauelementen, Materialübergängen in Vakuumkammern.

Kovar kann auch als Ausgleichsplatte auf ein Anschlusselement aus beispielsweise Stahl, Aluminium, Titan, Kupfer angeschweißt, gecrimpt oder geklebt werden. Als Bimetall kann ein günstiges Ausdehnungsverhalten des Anschlusselementes relativ zur Glasausdehnung erzielt werden. Die Ausgleichsplatte ist bevorzugt hutförmig.

Das elektrische Anschlusselement enthält auf der zur Lotmasse ausgerichteten Fläche eine Beschichtung die Kupfer, Zink, Zinn, Silber, Gold oder Kombination davon, bevorzugt Silber enthält. Dadurch wurde eine Ausbreitung der Lotmasse über die Beschichtung hinweg verhindert und die Austrittsbreite begrenzt.

Das elektrische Anschlusselement kann in Brückenform mit mindestens zwei Kontaktflächen, aber auch als Anschlusselement mit einer Kontaktfläche ausgestaltet sein.

Die Anschlusselemente sind in der Draufsicht beispielsweise bevorzugt 1 mm bis 50 mm lang und breit und besonders bevorzugt 3 mm bis 30 mm lang und breit und ganz besonders bevorzugt 2 mm bis 4 mm breit und 12 mm bis 24 mm lang.

Die Form des elektrischen Anschlusselementes kann Lotdepots im Zwischenraum von Anschlusselement und elektrisch leitfähiger Struktur ausbilden. Die Lotdepots und Benetzungseigenschaften des Lotes am Anschlusselement verhindern den Austritt der Lotmasse aus dem Zwischenraum. Lotdepots können rechtwinklig, verrundet oder polygonal ausgestaltet sein.

Die Verteilung der Lotwärme und damit die Verteilung der Lotmasse im Lötvorgang kann durch die Form des Anschlusselementes definiert werden. Lotmasse fließt zum wärmsten Punkt. Beispielsweise kann die Brücke eine Einfach- oder Doppelhutform aufweisen um die Wärme während des Lötvorgangs vorteilhaft im Anschlusselement zu verteilen.

Das Einbringen der Energie beim elektrischen Verbinden von elektrischem Anschlusselement und elektrisch leitfähiger Struktur erfolgt bevorzugt mit Stempel, Thermoden, Kolbenlöten, bevorzugt Laserlöten, Heißluftlöten, Induktionslöten, Widerstandslöten und/oder mit Ultraschall.

Die Aufgabe der Erfindung wird weiter durch ein Verfahren zur Herstellung einer Scheibe mit einem Anschlusselement gelöst, wobei
a) Lotmasse auf dem Anschlusselement als Plättchen mit festgelegter Schichtdicke, Volumen, Form und Anordnung angeordnet und aufgebracht wird,
b) Elektrisch leitfähige Struktur auf einem Substrat aufgebracht wird,
c) das Anschlusselement mit der Lotmasse auf der elektrisch leitfähigen Struktur anordnet wird und
d) das Anschlusselement mit der elektrisch leitfähigen Struktur verlötet wird.

Die Lotmasse wird bevorzugt vorher auf die Anschlusselemente appliziert, bevorzugt als Plättchen mit festgelegter Schichtdicke, Volumen, Form und Anordnung auf dem Anschlusselement.

Das Anschlusselement wird mit einem nicht dargestelltem Blech, Litze, Geflecht aus beispielsweise Kupfer verschweißt oder gecrimpt und mit der ebenfalls nicht dargestellten Bordelektrik verbunden.

Das Anschlusselement wird bevorzugt in Heizscheiben oder in Scheiben mit Antennen in Gebäuden, insbesondere in Automobilen, Eisenbahnen, Flugzeugen oder Seefahrzeugen benutzt. Das Anschlusselement dient dazu, die leitenden Strukturen der Scheibe mit elektrischen Systemen zu verbinden, welche außerhalb der Scheibe angeordnet sind. Die elektrischen Systeme sind Verstärker, Steuereinheiten oder Spannungsquellen.

Die Erfindung wird anhand einer Zeichnung und Ausführungsbeispielen näher erläutert. Es zeigen:
Fig. 1 eine perspektivische Darstellung einer gattungsgemäßen Scheibe (nicht beansprucht),
Fig. 2 einen Schnitt A-A durch die Scheibe gemäß der Figur 1,
Fig. 3 einen Schnitt durch eine alternative Scheibe (nicht beansprucht),
Fig. 4 einen Schnitt durch eine weitere alternative Scheibe (nicht beansprucht),
Fig. 5 einen Schnitt durch eine erfindungsgemäße Scheibe,
Fig. 6 eine perspektivische Darstellung einer alternativen Ausgestaltung einer Scheibe (nicht beansprucht),
Fig. 7 einen Schnitt B-B durch die Scheibe gemäß der Figur 6 und
Fig. 8 ein detailliertes Flussdiagramm des erfindungsgemäßen Verfahrens.

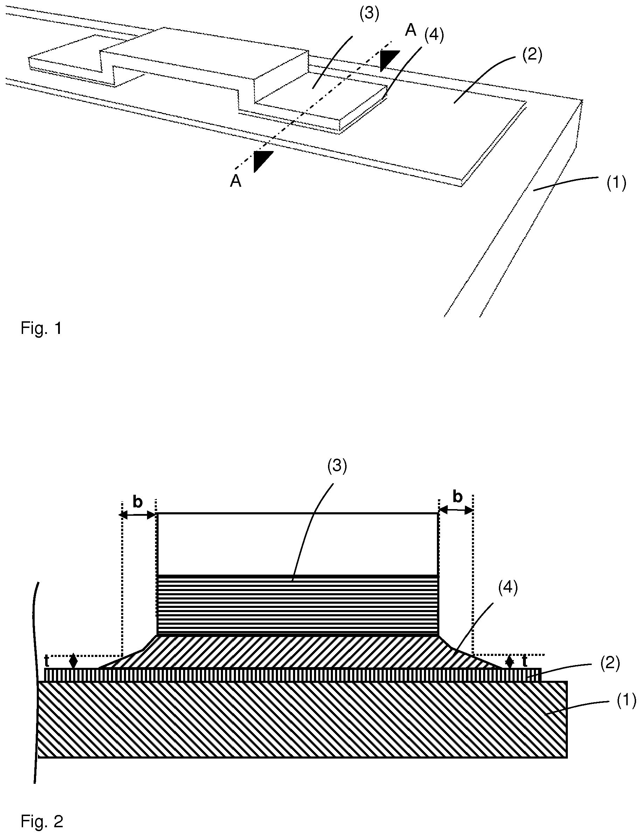

Fig.1 und Fig. 2 zeigen je ein Detail einer beheizbaren Scheibe 1 im Bereich des elektrischen Anschlusselementes 3. Die Scheibe 1 war ein 3 mm dickes thermisch vorgespanntes Einscheibensicherheitsglas aus Natron-Kalk-Glas. Die Scheibe 1 wies eine Breite von 150 cm und eine Höhe von 80 cm auf. Auf der Scheibe 1 war eine elektrisch leitfähige Struktur 2 in Form einer Heizleiterstruktur 2 aufgedruckt. Die elektrisch leitfähige Struktur 2 enthielt Silberpartikel und Glasfritten. Im Randbereich der Scheibe 1 war die elektrisch leitfähige Struktur 2 auf eine Breite von 10 mm verbreitert und bildete eine Kontaktfläche für das elektrische Anschlusselement 3. Im Randbereich der Scheibe 1 befand sich weiter ein nicht dargestellter Abdecksiebdruck. Im Bereich der Kontaktfläche zwischen dem elektrischen Anschlusselement 3 und der elektrisch leitfähigen Struktur 2 war Lotmasse 4 aufgebracht, die eine dauerhafte elektrische und mechanische Verbindung zwischen dem elektrischen Anschlusselement 3 und der elektrisch leitfähigen Struktur 2 bewirkte. Die Lotmasse 4 enthielt 57 Gew.-% Wismut, 40 Gew.-% Zinn und 3 Gew.-% Silber. Die Lotmasse 4 war durch ein vorgegebenes Volumen und Form vollständig zwischen dem elektrischen Anschlusselement 3 und der elektrisch leitfähigen Struktur 2 angeordnet. Die Lotmasse 4 hatte eine Dicke von 250 µm. Ein Austritt der Lotmasse 4 aus dem Zwischenraum zwischen dem elektrischen Anschlusselement 3 und der elektrisch leitfähigen Struktur 2, die eine Schichtdicke t von 50 µm überstieg, wurde auf einer maximalen Austrittsbreite von b = 0,5 mm beobachtet. Das elektrische Anschlusselement 3 war eine Legierung die 54 Gew.-% Eisen, 29 Gew.-% Nickel und 17 Gew.-% Kobalt enthielt. Das elektrische Anschlusselement 3 war brückenförmig ausgestaltet und hatte eine Breite von 4 mm und eine Länge von 24 mm. Die Materialdicke des Anschlusselementes 3 betrug 0,8 mm. Die Kontaktfläche des Anschlusselements 3 wies eine Breite von 4 mm und eine Länge von 4 mm auf. Durch die Anordnung der Lotmasse 4, vorgegeben durch das Anschlusselement 3 und die elektrisch leitfähige Struktur 2, wurden keine kritischen mechanischen Spannungen in der Scheibe 1 beobachtet. Die Verbindung der Scheibe 1 mit dem elektrischen Anschlusselement 3 war über die elektrisch leitfähige Struktur 2 dauerhaft stabil.

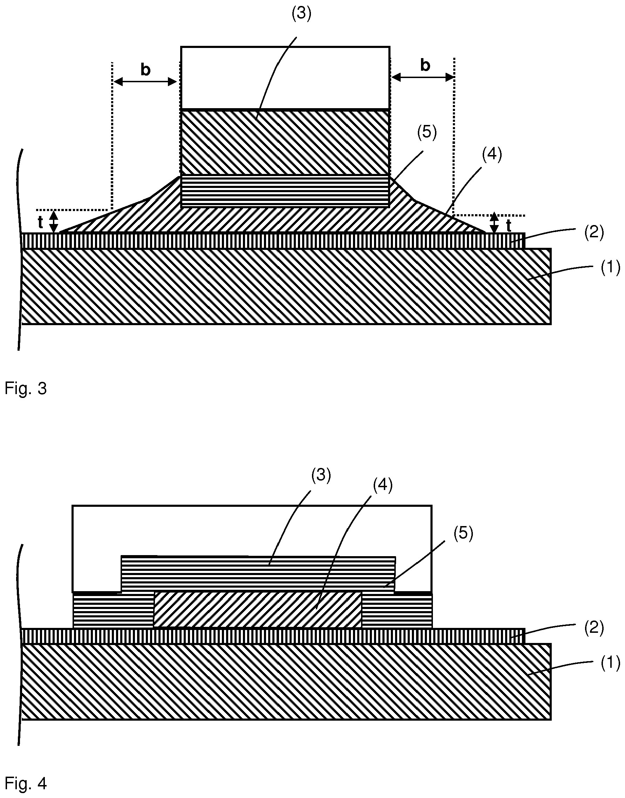

Fig. 3 zeigt in Fortführung des Ausführungsbeispiels der Figuren 1 und 2 eine alternative Ausgestaltung des Anschlusselementes 3. Das elektrische Anschlusselement 3 war auf der zur Lotmasse 4 hin ausgerichteten Fläche mit einer silberhaltigen Beschichtung 5 versehen. Dadurch wurde eine Ausbreitung der Lotmasse über die Beschichtung 5 hinweg verhindert und die Austrittsbreite b begrenzt. Die Austrittsbreite b der Lotmasse 4 war unterhalb von 1 mm. Aufgrund der Anordnung der Lotmasse 4 wurden keine kritischen mechanischen Spannungen in der Scheibe 1 beobachtet. Die Verbindung der Scheibe 1 mit dem elektrischen Anschlusselement 3 war über die elektrisch leitfähige Struktur 2 dauerhaft stabil.

Fig. 4 zeigt in Fortführung des Ausführungsbeispiels der Figuren 1 und 2 eine weitere alternative Ausgestaltung des Anschlusselementes 3. Das elektrische Anschlusselement 3 enthielt auf der zur Lotmasse 4 hin ausgerichteten Fläche eine Aussparung mit einer Tiefe von 250 µm, die ein Lotdepot für die Lotmasse 4 bildete. Ein Austritt der Lotmasse 4 aus dem Zwischenraum konnte vollständig verhindert werden. Die thermischen Spannungen in der Scheibe 1 waren unkritisch und es wurde eine dauerhafte elektrische und mechanische Verbindung zwischen den Anschlusselement 3 und der Scheibe 1 über die elektrisch leitfähige Struktur 2 bereitgestellt.

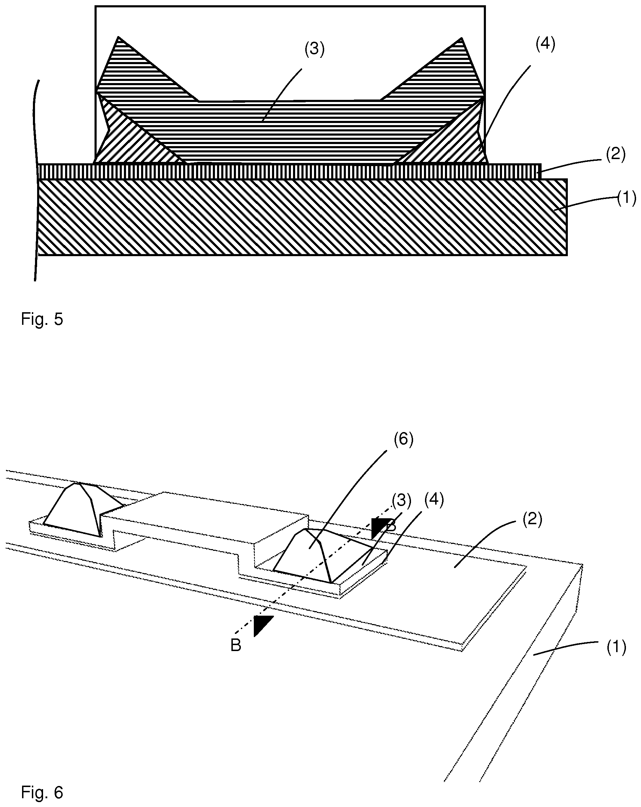

Fig. 5 zeigt in Fortführung des Ausführungsbeispiels der Figuren 1 und 2 eine Ausgestaltung des erfindungsgemäßen Anschlusselementes 3. Das elektrische Anschlusselement 3 war an den Randbereichen aufgebogen. Die Höhe der Aufbiegung der Randbereiche von der Glasscheibe 1 betrug maximal 400 µm. Dadurch wurde ein Raum für die Lotmasse 4 gebildet. Die vorgegebene Lotmasse 4 bildete zwischen dem elektrischen Anschlusselement 3 und der elektrisch leitfähigen Struktur 2 einen konkaven Meniskus. Ein Austritt von Lotmasse 4 aus dem Zwischenraum konnte vollständig verhindert werden. Die Austrittsbreite b war in etwa 0, größtenteils aufgrund des gebildeten Meniskus unterhalb von null. Die thermischen Spannungen in der Scheibe 1 waren unkritisch und es wurde eine dauerhafte elektrische und mechanische Verbindung zwischen dem Anschlusselement 3 und der Scheibe 1 über die elektrisch leitfähige Struktur 2 bereitgestellt.

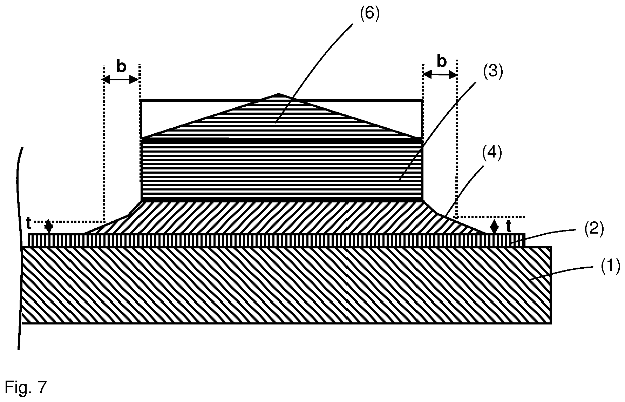

Fig. 6 und Fig. 7 zeigen eine weitere Ausgestaltung einer Scheibe 1 mit Anschlusselement 3 in Brückenform. Das Anschlusselement 3 enthielt eine eisenhaltige Legierung mit einem thermischen Ausdehnungskoeffizienten von 8 x 10⁻⁶/°C. Die Materialdicke betrug 2 mm. Im Bereich der Kontaktfläche des Anschlusselementes 3 mit der Scheibe 1 waren hutförmige Ausgleichskörper 6 mit einer Eisen Nickel Kobalt Legierung aufgebracht. Die maximale Schichtdicke der hutförmigen Ausgleichskörper 6 betrug 4 mm. Durch die Ausgleichskörper konnten die thermischen Ausdehnungskoeffizienten des Anschlusselementes 3 den Erfordernissen der Scheibe 1 und der Lotmasse 4 angepasst werden. Die hutförmigen Ausgleichskörper 6 führten zu einem verbesserten Wärmefluss während der Herstellung der Lotverbindung 4. Die Erwärmung erfolgte vor allem im Zentrum der Kontaktfläche. Die Austrittsbreite b der Lotmasse 4 konnte weiter reduziert werden. Aufgrund der geringen Austrittsbreite b von < 1 mm und des angepassten Ausdehnungskoeffizienten konnten die thermischen Spannungen in der Scheibe 1 weiter reduziert werden. Die thermischen Spannungen in der Scheibe 1 waren unkritisch und es wurde eine dauerhafte elektrische und mechanische Verbindung zwischen dem Anschlusselement 3 und der Scheibe 1 über die elektrisch leitfähige Struktur 2 bereitgestellt.

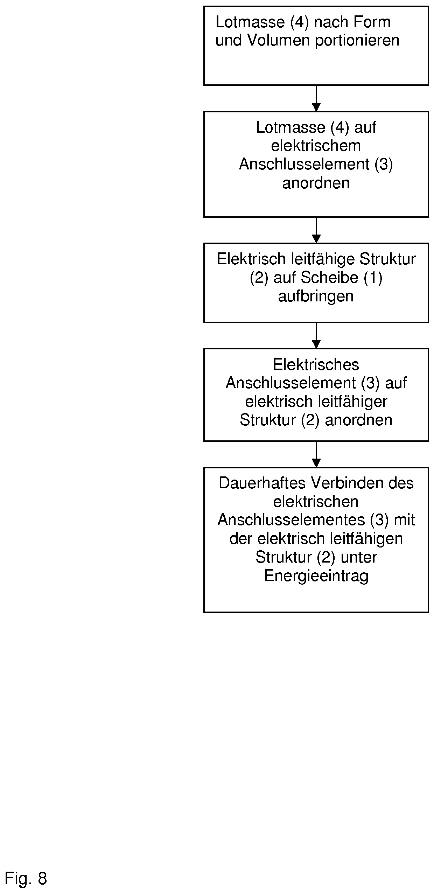

Fig. 8 zeigt detailliert ein erfindungsgemäßes Verfahren zur Herstellung einer Scheibe 1 mit elektrischem Anschlusselement 3. Dort wird ein Beispiel für das erfindungsgemäße Verfahren zur Herstellung einer Scheibe mit einem elektrischen Anschlusselement 3 dargestellt. Als erster Schritt war es notwendig die Lotmasse 4 nach Form und Volumen zu portionieren. Die portionierte Lotmasse 4 wurde auf dem elektrischen Anschlusselement 3 angeordnet. Das elektrische Anschlusselement 3 wurde mit der Lotmasse 3 auf der elektrisch leitfähigen Struktur 2 angeordnet. Es erfolgte eine dauerhafte Verbindung des elektrischen Anschlusselementes 3 mit der elektrisch leitfähigen Struktur 2 und dadurch mit der Scheibe 1 unter Energieeintrag.

### Beispiel (nicht erfindungsgemäß)

Testproben wurden angefertigt mit der Scheibe 1 (Dicke 3 mm, Breite 150 cm und Höhe 80 cm) der elektrisch leitfähige Struktur 2 in Form einer Heizleiterstruktur, dem elektrischen Anschlusselement 3, der Silberschicht auf den Kontaktflächen des Anschlusselements 3 und der Lotmasse 4. Die Lotmasse 4 wurde vorher als Plättchen mit festgelegter Schichtdicke, Volumen und Form auf der Kontaktfläche des Anschlusselements 3 aufgebracht. Das Anschlusselement 3 wurde mit der angebrachten Lotmasse auf der elektrisch leitfähigen Struktur 2 angebracht. Das Anschlusselement wurde bei einer Temperatur von 200 °C und einer Behandlungsdauer von 2 Sekunden auf der elektrisch leitfähigen Struktur 2 angelötet. Ein Austritt der Lotmasse 4 aus dem Zwischenraum zwischen dem elektrischen Anschlusselement 3 und der elektrisch leitfähigen Struktur 2, die eine Schichtdicke t von 50 µm überstieg, wurde nur auf einer maximalen Austrittsbreite von b = 0,5 mm beobachtet. Die Ausmaße und Zusammensetzungen der elektrisch leitfähige Struktur 2, dem elektrischen Anschlusselement 3, der Silberschicht auf den Kontaktflächen des Anschlusselements 3 und der Lotmasse 4 gehen aus der Tabelle 1 und der Figuren 1 und 2 und der Figurenbeschreibung hervor.

Bei sämtlichen Proben konnte bei einem Temperaturunterschied von +80 °C auf -30 °C beobachtet werden, dass kein Glassubstrat 1 brach oder Schäden aufwies. Es konnte gezeigt werden, dass kurz nach dem Anlöten diese Scheiben 1 mit angelöteten Anschlusselement 3 gegen plötzlichen Temperaturabfall stabil waren.

**Tabelle 1**

| Bestandteile | Material | Beispiel |
|---|---|---|
| Anschlusselement | | |
| | Eisen (Gew.-%) | 54 |
| | Nickel (Gew.-%) | 29 |
| | Kobalt (Gew.-%) | 17 |
| | CTE (coefficient of thermal expansion) x 10⁻⁶ (0 °C - 100 °C) | 5,1 |
| | Differenz zwischen CTE Anschlusselement und Substrat x 10⁻⁶rC (0 °C - 100 °C) | 3,2 |
| | Dicke des Anschlusselements (m) | 8,0 x 10⁻⁴ |
| Lötbare Schicht | | |
| | Silber (Gew.-%) | 100 |
| | Dicke der Schicht (m) | 7,0 x 10⁻⁶ |
| Lotschicht | | |
| | Zinn (Gew.-%) | 40 |
| | Wismut (Gew.-%) | 57 |
| | Silber (Gew.-%) | 3 |
| | Dicke der Lotschicht in (m) | 250 x 10⁻⁶ |
| | Die Dicke der lötbaren Schicht und der Lotschicht (m) | 255 x 10⁻⁶ |
| Glas Substrat | | |
| (Natron-Kalk-Glas) | | |
| | CTE x 10⁻⁶ (0 °C - 320 °C) | 8,3 |

### Vergleichsbeispiel 1

Das Vergleichsbeispiel 1 wurde genauso durchgeführt wie das Beispiel mit den folgenden Unterschieden. Die Ausmaße und Bestandteile der elektrisch leitfähigen Struktur 2, dem elektrischen Anschlusselement 3, der Metallschicht auf den Kontaktflächen des Anschlusselements 3 und der Lotmasse 4 gehen aus der Tabelle 2 hervor. Die Lotmasse 4 wurde nach dem Stand der Technik nicht vorher als Plättchen auf der Kontaktfläche des Anschlusselements 3 angebracht. Das Anschlusselement 3 wurde mit der elektrisch leitfähigen Struktur 2 nach dem herkömmlichen Verfahren verlötet. Beim Austritt der Lotmasse 4 aus dem Zwischenraum zwischen dem elektrischen Anschlusselement 3 und der elektrisch leitfähigen Struktur 2, die eine Schichtdicke t von 50 µm überstieg, wurde eine durchschnittliche Austrittsbreite b = 2 mm bis 3 mm erhalten.

Bei einem plötzlichen Temperaturunterschied von +80 °C auf -30 °C wurde beobachtet, dass die Glassubstrate 1 kurz nach dem Anlöten überwiegend Schäden aufwiesen.

**Tabelle 2**

| Bestandteile | Material | VergleichsBeispiel 1 |
|---|---|---|
| Anschlusselement | | |
| | Titan (Gew.-%) | 100 |
| | CTE (coefficient of thermal expansion) x 10⁻⁶ (0°C - 100°C) | 8,80 |
| | Differenz zwischen CTE des Anschlusselements und des Substrats x 10⁻⁶/°C (0 °C - 100 °C) | 0,5 |
| | Dicke des Anschlusselements (m) | 8,0 x 10⁻⁴ |
| Lötbare Schicht | | |
| | Silber (Gew.-%) | 100 |
| | Dicke der Schicht (m) | 7,0 x 10⁻⁶ |
| Lotschicht | | |
| | Zinn (Gew.-%) | 48 |
| | Wismut (Gew.-%) | 46 |
| | Silber (Gew.-%) | 2 |
| | Kupfer (Gew.-%) | 4 |
| | Dicke der Lotschicht in (m) | 50-200 x 10⁻⁶ |
| | Die Dicke der lötbaren Schicht und der Lotschicht (m) | 55-205 x 10⁻⁶ |
| Glas Substrat | | |
| (Natron-Kalk-Glas) | | |
| | CTE x 10⁻⁶ (0 °C - 320 °C) | 8,3 |

### Vergleichsbeispiel 2

Das Vergleichsbeispiel 2 wurde genauso durchgeführt wie das Beispiel mit den folgenden Unterschieden. Die Ausmaße und Bestandteile der elektrisch leitfähigen Struktur 2, dem elektrischen Anschlusselement 3, der Metallschicht auf den Kontaktflächen des Anschlusselements 3 und der Lotmasse 4 gehen aus der Tabelle 3 hervor. Die Lotmasse 4 wurde nach dem Stand der Technik nicht vorher als Plättchen auf der Kontaktfläche des Anschlusselements 3 angebracht. Das Anschlusselement 3 wurde mit der elektrisch leitfähigen Struktur 2 nach dem herkömmlichen Verfahren verlötet. Beim Austritt der Lotmasse 4 aus dem Zwischenraum zwischen dem elektrischen Anschlusselement 3 und der elektrisch leitfähigen Struktur 2, die eine Schichtdicke t von 50 µm überstieg, wurde eine durchschnittliche Austrittsbreite b = 1 mm bis 1,5 mm erhalten.

Bei einem plötzlichen Temperaturunterschied von +80 °C auf -30 °C wurde beobachtet, dass die Glassubstrate 1 kurz nach dem Anlöten überwiegend Schäden aufwiesen.

**Tabelle 3**

| Bestandteile | Material | VergleichsBeispiel 2 |
|---|---|---|
| Anschlusselement | | |
| | Kupfer (Gew.-%) | 100 |
| | CTE (coefficient of thermal expansion) x 10⁻⁶ (0 °C - 100 °C) | 16 |
| | Differenz zwischen CTE des Anschlusselements und des Substrats x 10⁻⁶/°C (0 °C - 100 °C) | 7,7 |
| | Dicke des Anschlusselements (m) | 8,0 x 10⁻⁴ |
| Lötbare Schicht | | |
| | Silber (Gew.-%) | 100 |
| | Dicke der Schicht (m) | 7,0 x 10⁻⁶ |
| Lotschicht | | |
| | Zinn (Gew.-%) | 71,5 |
| | Indium (Gew.-%) | 24 |
| | Silber (Gew.-%) | 2,5 |
| | Wismut (Gew.-%) | 1,5 |
| | Kupfer (Gew.-%) | 0,5 |
| | Dicke der Lotschicht in (m) | 50-200 x 10⁻⁶ |
| | Die Dicke der lötbaren Schicht und der Lotschicht (m) | 55-205 x 10⁻⁶ |
| Glas Substrat | | |
| (Natron-Kalk-Glas) | | |
| | CTE x 10⁻⁶ (0 °C - 320 °C) | 8,3 |

### Bezugszeichenliste

- (1): Scheibe / Glas
- (2): Elektrisch leitfähige Struktur/ Ag-Siebdruck
- (3): Elektrisches Anschlusselement / Fe-Ni Legierung Kovar
- (4): Lotmasse (Bi40Sn57Ag3)
- (5): Benetzungsschicht / Ag-Beschichtung
- (6): Ausgleichskörper
- b: maximale Austrittsbreite der Lotmasse
- t: Grenzdicke der Lotmasse
- A-A': Schnittlinie
- B-B': Schnittlinie

## Patentansprüche

1. Eine Scheibe mit einem elektrischen Anschlusselement, umfassend:
- ein Substrat aus Glas (1) mit einem ersten thermischen Ausdehnungskoeffizienten,
- eine elektrisch leitfähige Struktur (2) mit einer Schichtdicke von 5 µm bis 40 µm auf einem Bereich des Substrats (1),
- ein Anschlusselement (3) mit einem zweiten thermischen Ausdehnungskoeffizienten, wobei die Differenz zwischen dem ersten und dem zweiten Ausdehnungskoeffizienten < 5 x 10⁻⁶/°C ist und
- eine Schicht einer Lotmasse (4), die das Anschlusselement (3) mit Teilbereichen der elektrisch leitfähigen Struktur (2) elektrisch verbindet,
**dadurch gekennzeichnet, dass** das Anschlusselement (3) zumindest 50 Gew.-% bis 60 Gew.-% Eisen, 25 Gew.-% bis 35 Gew.-% Nickel, 15 Gew.-% bis 20 Gew.-% Kobalt, 0 Gew.-% bis 0,5 Gew.-% Silizium, 0 Gew.-% bis 0,1 Gew.-% Kohlenstoff oder 0 Gew.-% bis 0,5 Gew.-% Mangan enthält
und dass die maximale Austrittsbreite b, definiert als der Abstand zwischen den Außenkanten des Anschlusselementes (3) und der Stelle des Lotmasseübertritts, an dem die Lotmasse (4) eine Schichtdicke von 50 µm unterschreitet, in den vom elektrischen Anschlusselement (3) und der elektrisch leitfähigen Struktur (2) gebildeten Zwischenraum in einem konkaven Meniskus zurückgezogen ist.

2. Scheibe nach einem der Ansprüche 1, wobei die elektrisch leitfähige Struktur (2) eine Schichtdicke von 8 µm bis 15 µm aufweist.

3. Scheibe nach einem der Ansprüche 1 oder 2, wobei die elektrisch leitfähige Struktur (2) Silber enthält.

4. Scheibe nach einem der Ansprüche 1 bis 3, wobei die Schichtdicke des Lots (4) < 3.0 x 10⁻⁴ m ist.

5. Scheibe nach einem der Ansprüche 1 bis 4, wobei die Lotmasse (4) Zinn und Wismut, Indium, Zink, Kupfer, Silber oder Zusammensetzungen davon enthält.

6. Scheibe nach Anspruch 5, wobei der Anteil an Zinn in der Lotzusammensetzung (4) 3 Gew.-% bis 99,5 Gew.-% beträgt.

7. Scheibe nach Anspruch 5 oder 6, wobei der Anteil von Wismut, Indium, Zink, Kupfer, Silber oder Zusammensetzungen davon in der Lotzusammensetzung (4) 0,5 Gew.-% bis 97 Gew.-% beträgt.

8. Scheibe nach einem der Ansprüche 1 bis 7, wobei das Anschlusselement (3) mit Nickel, Zinn, Kupfer und / oder Silber beschichtet ist.

9. Scheibe nach Anspruch 8, wobei das Anschlusselement (3) mit 0,1 µm bis 0,3 µm Nickel und / oder 3 µm bis 10 µm Silber beschichtet ist.

10. Verfahren zur Herstellung einer Scheibe mit einem elektrischen Anschlusselement (3) nach einem der Ansprüche 1 bis 9, wobei
a) Lotmasse (4) auf dem Anschlusselement (3) als Plättchen mit festgelegter Schichtdicke, Volumen, Form und Anordnung angeordnet und aufgebracht wird,
b) Elektrisch leitfähige Struktur (2) auf einem Substrat (1) aufgebracht wird,
c) das Anschlusselement (3) mit der Lotmasse (4) auf der elektrisch leitfähigen Struktur (2) anordnet wird und
d) das Anschlusselement (3) mit der elektrisch leitfähigen Struktur (2) verlötet wird.

11. Verwendung einer Scheibe mit einem elektrischen Anschlusselement nach einem der Ansprüche 1 bis 9, für Fahrzeuge mit elektrisch leitfähigen Strukturen, bevorzugt mit Heizleitern und/oder Antennenleitern.

## Claims

1. A pane with an electrical connection element, comprising:
- a substrate made of glass (1) with a first coefficient of thermal expansion,
- an electrically conductive structure (2) with a layer thickness of 5 µm to 40 µm on a region of the substrate (1),
- a connection element (3) with a second coefficient of thermal expansion, wherein the difference between the first and the second coefficient of expansion is < 5 x 10⁻⁶/°C, and
- a layer of a solder compound (4) that electrically connects the connection element (3) to subregions of the electrically conductive structure (2),
**characterised in that** the connection element (3) contains at least 50 wt.-% to 60 wt.-% iron, 25 wt.-% to 35 wt.-% nickel, 15 wt.-% to 20 wt.-% cobalt, 0 wt.-% to 0.5 wt.-% silicon, 0 wt.-% to 0.1 wt.-% carbon, or 0 wt.-% to 0.5 wt.-% manganese,
and that the maximum outflow width b, defined as the distance between the outer edges of the connection element (3) and the point of the soldering compound crossover, at which the soldering compound drops below a layer thickness of 50 µm, is pulled back in a concave meniscus into the intermediate space formed by the electrical connection element (3) and the electrically conductive structure (2).

2. Pane according to one of claims 1, wherein the electrically conductive structure (2) has a layer thickness of 8 µm to 15 µm.

3. Pane according to one of claims 1 or 2, wherein the electrically conductive structure (2) contains silver.

4. Pane according to one of claims 1 through 3, wherein the layer thickness of the solder (4) is < 3.0 x 10⁻⁴.

5. Pane according to one of claims 1 through 4, wherein the soldering compound (4) contains tin and bismuth, indium, zinc, copper, silver, or compositions thereof.

6. Pane according to claim 5, wherein the proportion of tin in the solder composition (4) is 3 wt.-% to 99.5 wt.-%.

7. Pane according to claim 5 or 6, wherein the proportion of bismuth, indium, zinc, copper, silver, or compositions thereof in the solder composition (4) is 0.5 wt.-% to 97 wt.-%.

8. Pane according to one of claims 1 through 7, wherein the connection element (3) is coated with nickel, tin, copper, and / or silver.

9. Pane according to claim 8, wherein the connection element (3) is coated with 0.1 µm to 0.3 µm nickel and / or 3 µm to 10 µm silver.

10. Method for producing a pane with an electrical connection element (3) according to one of claims 1 through 9, wherein
a) soldering compound (4) is arranged and applied on the connection element (3) as a platelet with a fixed layer thickness, volume, shape, and arrangement,
b) electrically conductive structure (2) is applied on a substrate (1),
c) the connection element (3) with the soldering compound (4) is arranged on the electrically conductive structure (2), and
d) the connection element (3) is soldered to the electrically conductive structure (2).

11. Use of a pane with an electrical connection element according to one of claims 1 through 9, for motor vehicles with electrically conductive structures, preferably with heating conductors and/or antenna conductors.

## Revendications

1. Vitre ayant un élément de connexion électrique, comportant :
- un substrat de verre (1) ayant un premier coefficient de dilatation thermique ;
- une structure (2) conductrice de l'électricité, ayant une épaisseur de couche de 5 µm à 40 µm sur une région du substrat (1) ;
- un élément de connexion (3) ayant un second coefficient de dilatation thermique, la différence entre le premier et le second coefficient de dilatation thermique étant < 5 x 10⁻⁶/°C ; et
- une couche d'une masse de soudure (4), qui connecte électriquement l'élément de connexion (3) à des sous-régions de la structure (2) conductrice de l'électricité.
**caractérisée par le fait que** l'élément de connexion (3) contient au moins 50 % en poids à 60 % en poids de fer, 25 % en poids à 35 % en poids de nickel, 15 % en poids à 20 % en poids de cobalt, 0 % en poids à 1,5 % en poids de silicium, 0 % en poids à 0,1 % en poids de carbone ou 0 % en poids à 0,5 % en poids de manganèse, et **par le fait que** la largeur de sortie maximale b, définie comme étant la distance entre les bords extérieurs de l'élément de connexion (3) et le point de franchissement de la masse de soudure auquel la masse de soudure (4) tombe au-dessous d'une épaisseur de couche de 50 µm, dans l'espace intermédiaire formé par l'élément de connexion électrique (3) et la structure (2) conductrice de l'électricité, est retirée en un ménisque concave.

2. Vitre selon la revendication 1, dans laquelle la structure (2) conductrice de l'électricité présente une épaisseur de couche de 8 µm à 15 µm.

3. Vitre selon l'une des revendications 1 ou 2, dans laquelle la structure (2) conductrice de l'électricité contient de l'argent.

4. Vitre selon l'une des revendications 1 à 3, dans laquelle l'épaisseur de couche de la soudure (4) est < 3,0 x 10⁻⁴ m.

5. Vitre selon l'une des revendications 1 à 4, dans laquelle la masse de soudure (4) contient de l'étain et du bismuth, de l'indium, du zinc, du cuivre, de l'argent ou des compositions de ceux-ci.

6. Vitre selon la revendication 5, dans laquelle la proportion d'étain dans la composition de soudure (4) s'élève à 3 % en poids à 99,5 % en poids.

7. Vitre selon l'une des revendications 5 ou 6, dans laquelle la proportion de bismuth, indium, zinc, cuivre, argent ou compositions de ceux-ci dans la composition de soudure (4) s'élève à 0,5 % en poids à 97 % en poids.

8. Vitre selon l'une des revendications 1 à 7, dans laquelle l'élément de connexion (3) est revêtu de nickel, d'étain, de cuivre et/ou d'argent.

9. Vitre selon la revendication 8, dans laquelle l'élément de connexion (3) est revêtu de 0,1 µm à 0,3 µm de nickel et/ou de 3 µm à 10 µm d'argent.

10. Procédé de fabrication d'une vitre ayant un élément de connexion électrique (3) selon l'une des revendications 1 à 9, dans lequel
a) une masse de soudure (4) est disposée et appliquée sur l'élément de connexion (3) sous forme de plaquettes avec des épaisseur de couche, volume, forme et agencement fixés ;
b) une structure (2) conductrice de l'électricité est appliquée sur un substrat (1) ;
c) l'élément de connexion (3) ayant la masse de soudure (4) est disposé sur la structure (2) conductrice de l'électricité ; et
d) l'élément de connexion (3) est soudé à la structure (2) conductrice de l'électricité.

11. Utilisation d'une vitre ayant un élément de connexion électrique selon l'une des revendications 1 à 9, pour des véhicules ayant des structures conductrices de l'électricité, de préférence ayant des conducteurs chauffants et/ou des conducteurs d'antenne.
